(19) Europäisches Patentamt
European Patent Office
Office européen des brevets

(11) EP 2 323 271 B1

(12) FASCICULE DE BREVET EUROPEEN

(45) Date de publication et mention
de la délivrance du brevet:
**30.04.2014 Bulletin 2014/18**

(51) Int Cl.:
*H04B 1/707* (2011.01)      *G01S 1/00* (2006.01)
*G01S 19/30* (2010.01)      *H04B 1/708* (2011.01)

(21) Numéro de dépôt: **10190262.5**

(22) Date de dépôt: **05.11.2010**

(54) **Procédé d'acquisition de signaux de radionavigation à code d'étalement à période quasi-infinie**

Verfahren zur Erfassung von Funknavigationssignalen mit Streuungskode mit quasi-unendlicher Dauer

Method for acquiring radio navigation signals with spreading code having an almost-infinite period

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2009 FR 0957945**

(43) Date de publication de la demande:
**18.05.2011 Bulletin 2011/20**

(73) Titulaire: **Centre National d'Etudes Spatiales**
**75039 Paris Cedex 01 (FR)**

(72) Inventeur: **de Latour, Antoine**
**31500 Toulouse (FR)**

(74) Mandataire: **Office Freylinger**
**P.O. Box 48**
**8001 Strassen (LU)**

(56) Documents cités:
**WO-A1-2004/034604      WO-A2-2006/040325**
**US-A1- 2006 097 915      US-A1- 2008 159 198**

- **VINCENT HEIRIES ET AL: "Analysis of Non Ambiguous BOC Signal Acquisition Performance", ION GNSS. INTERNATIONAL TECHNICAL MEETING OF THE SATELLITEDIVISION OF THE INSTITUTE OF NAVIGATION, WASHINGTON, DC, US, no. 17TH, 21 septembre 2004 (2004-09-21), pages 2611-2622, XP002471945,**
- **LOGAN SCOTT: "GNSS Solutions: Signal acquisition and search, and antenna polarization", INSIDE GNSS, GIBBONS MEDIA, US, 1 mars 2007 (2007-03-01), pages 26-33, XP007913859, ISSN: 1559-503X**

**Description**

**Domaine technique**

La présente invention concerne un procédé d'acquisition, de préférence avec une aide en temps externe, de signaux de radionavigation portant des codes d'étalement à période quasi-infinie. L'invention concerne en outre un dispositif pour mettre en oeuvre un tel procédé.

**Etat de la technique**

De manière générale, les signaux de radionavigation émis par des satellites (ou pseudolites) d'un système de positionnement se présentent sous la forme d'une porteuse modulée par une forme d'onde d'étalement contenant un code binaire pseudo-aléatoire (« code d'étalement »). La modulation de la porteuse provoquant l'étalement du spectre autour de la fréquence de la porteuse, les signaux de radionavigation sont souvent appelés « en spectre étalé ». Les codes pseudo-aléatoires représentent un identificateur du signal et donc du satellite émetteur. Connus des récepteurs, ils permettent à ceux-ci un Accès Multiple à Répartition de Code (AMRC). Accessoirement, certains signaux de positionnement par satellites peuvent aussi transporter des données utiles (p. ex. le message de navigation) sous forme d'une séquence binaire (à rythme nettement moins élevé que le code pseudo-aléatoire) modulée en plus sur la porteuse. Dans la suite, on fera abstraction de cette charge de données utiles.

Dans le cas de GPS, les signaux de radionavigation sont transmis dans les bandes de fréquences L1, centrée sur 1575,42 MHz et L2, centrée sur 1227,6 MHz. Au cours de la modernisation de GPS, la bande L5, centrée sur 1176,45 MHz sera ajoutée. Les satellites de la constellation Galileo transmettront dans la bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz). Notons que les satellites de la constellation Compass transmettent ou transmettront dans la bande B1 (centrée sur 1561,098 MHz), B1-2 (centrée sur 1589,742 MHz), L1 (centrée sur 1575,42 MHz), B2 (centrée sur 1207,14 MHz), et B3 (centrée sur 1268,52 MHz). Les fréquences centrales représentent les fréquences des porteuses des différents signaux.

La réception d'un signal de radionavigation comprend normalement une première démodulation à l'aide d'une réplique interne de la porteuse générée dans le récepteur par un oscillateur piloté par une boucle de poursuite de porteuse et une seconde démodulation à l'aide d'une réplique interne de la forme d'onde d'étalement produite (la « réplique de code ») par un générateur de forme d'onde piloté par une boucle de poursuite de forme d'onde d'étalement (appelée aussi « boucle de poursuite de code »). Les signaux d'asservissement des boucles de poursuite de porteuse et de forme d'onde d'étalement sont utilisés par le récepteur pour déterminer sa position. La suite concernera principalement l'observable de code, c.-à-d. le signal de décalage temporel entre la forme d'onde d'étalement du signal reçu et la réplique interne de forme d'onde d'étalement produit à chaque pas de temps par la boucle de poursuite de forme d'onde d'étalement. Notons toutefois qu'une boucle de poursuite de porteuse est utilisée pour compenser l'effet Doppler.

Les répliques internes de code et de porteuse sont mélangées (multipliées) au signal de radionavigation entrant, après que celui-ci eut été filtré, amplifié transposé en fréquence ainsi que numérisé. Les produits du mixage sont ensuite intégrés, ce par quoi l'on réalise, globalement, une opération de corrélation entre les répliques internes et le signal entrant. Dans la réception de signaux de radionavigation, on distingue normalement deux phases : la phase dite « d'acquisition » et la phase dite « de poursuite ». En phase d'acquisition, l'on cherche à établir une synchronisation de la réplique interne de code sur le signal de radionavigation entrant (en d'autres mots, on détermine le décalage de code) ainsi que la fréquence Doppler du signal de radionavigation entrant. L'espace de recherche est donc, en principe, un espace deux-dimensionnel, dans lequel on cherche les valeurs du décalage de code et de la fréquence Doppler qui maximisent la fonction de corrélation. (En pratique, le signal est considéré comme acquis si la corrélation dépasse une certaine valeur seuil.)

Certains signaux de radionavigation utilisent des modulations ayant recours à une forme d'onde d'étalement dans laquelle le code binaire pseudo-aléatoire est multiplié par une séquence binaire ayant un rythme plus élevé que le code. Dans la suite, de telles modulations seront désignées comme « modulations à sous-porteuse ». La séquence binaire à rythme plus élevée sera considérée comme sous-porteuse, ce qui se justifie par le fait que la densité d'énergie spectrale d'un tel signal a deux lobes principaux distants de la fréquence de porteuse d'un écart spectral équivalent à la fréquence centrale (fréquence de sous-porteuse) de la séquence binaire. Des exemples de telles modulations sont les modulations BCS (de l'anglais « Binary Coded Symbol ») et les modulations BOC (de l'anglais « Binary Offset Carrier »), qui représentent en fait des modulations BCS particulières. De manière générale, BOC(n,m) est une fonction du temps t définie par :

$$BOC(n,m)(t) = C_m(t) \cdot sign[\sin(2\pi f_{sc}t)], \qquad \text{(Eq. 1)}$$

où $C_m(t)$ est un code binaire pseudo-aléatoire à rythme de bribes (chip rate) m x 1,023 Mcps (de l'anglais « mega chips per second », c.-à-d. $10^6$ bribes par seconde) prenant les valeurs +1 ou -1 et $f_{sc}$ la fréquence de sous-porteuse n x 1,023 MHz. Une condition sur n et m est que le rapport 2n/m soit entier. Dans le cas du service ouvert OS (Open Service) de Galileo, le rythme de bribes est fixé à 1,023 Mcps (méga-chips per second). Par « sous-porteuse BOC », on entend la forme d'onde BOC sans le code, c.-à-d. la partie $sign[\sin(2\pi f_{sc}t)]$. Notons que lorsqu'on remplace le sinus du côté droit de l'équation 1 par un cosinus, on obtient la fonction BOC en quadrature, notée BOCc :

$$BOCc(n,m)(t) = C_m(t) \cdot sign[\cos(2\pi f_{sc}t)]. \qquad \text{(Eq. 2)}$$

Par « sous-porteuse BOCc », on entend la forme d'onde BOCc sans le code, c.-à-d. la partie $sign[\cos(2\pi f_{sc}t)]$.

De manière plus générale, on obtient la forme d'onde en quadrature de phase d'une forme d'onde d'étalement BCS en décalant cycliquement la séquence de symboles d'un demi-symbole.

Les modulations à sous-porteuses visées ci-dessus ont certains avantages par rapport à des modulations BPSK («de l'anglais « Binary Phase Shift Keying ») classiques, notamment au niveau de la précision de mesure de position réalisable sur base des observables de code. Cependant, les formes d'onde d'étalement à sous-porteuse présentent aussi des inconvénients, car leur acquisition et leur poursuite sont plus difficiles à réaliser que p. ex. l'acquisition et la poursuite d'un signal de type BPSK. On peut expliquer ceci à l'aide des fonctions d'auto-corrélation. La fonction d'auto-corrélation d'une modulation BPSK ne présente qu'un seul extremum (pour un décalage temporel de 0), celle d'une modulation à sous-porteuse présente des oscillations et donc plusieurs extrémums sur lesquels la boucle de poursuite de code peut se verrouiller. En d'autres termes, un discriminateur de boucle de poursuite de code profitant de la précision supérieure conférée par la sous-porteuse aura le désavantage d'être ambigu (dans le sens que le décalage temporel entre la forme d'onde d'étalement du signal reçu et de sa réplique interne est potentiellement évalué par rapport à un mauvais pic de la fonction de corrélation.)

Les codes d'étalement présentent normalement une période fixe de l'ordre de quelques millisecondes, comme p.ex. 1 ms (1023 bribes) pour les codes Gold utilisés dans le signal C/A du système GPS ou 4 ms (4092 bribes) pour les codes (primaires) utilisés dans le cadre du signal OS (« Open Service ») de Galileo. Les procédés d'acquisition de signaux de radionavigation modulés par de tels codes peuvent donc exploiter la périodicité du code. Du document WO 2006/040325 A1, on connaît par exemple un procédé d'acquisition utilisant un filtre adapté (« matched filter »), dans lequel le code d'étalement en entier est chargé de manière échantillonnée dans un registre de code et le signal de radionavigation est échantillonné dans un registre de signal. A chaque impulsion d'horloge, on calcule la corrélation du signal dans le registre et le code et on décale le signal d'un échantillon dans son registre entre deux opérations de corrélation. Le code n'est pas décalé.

Un autre procédé d'acquisition est exposé dans le document WO 2004/034604 A1. Dans ce procédé le code d'étalement est chargé par segments de manière échantillonnée dans un registre de code et le signal de radionavigation est échantillonné dans un registre de signal. A chaque impulsion d'horloge, on calcule les corrélations entre les segments de code et les parties correspondantes du signal pour ainsi obtenir une pluralité de corrélations de court terme (STC, de l'anglais « short-term correlation »). La somme de toutes les STC est égale à la corrélation entre le code en entier et le signal dans le registre. Cependant, on ne calcule pas cette somme mais la transformée de Fourier du vecteur des valeurs STC. Cette transformée de Fourier permet de détecter la fréquence Doppler. Entre deux opérations de corrélation (calcul des différentes STCs et étapes connexes pour un décalage donné), on décale le signal d'un échantillon dans son registre, le code restant fixe. D'autres procédés d'acquisition sont expliqués p.ex. dans l'article « Signal acquisition and search, and antenna polarization », paru dans InsideGNSS, numéro de mars/avril 2007, pp. 26-33. Le document US 2006/0097915 A1 décrit un procédé d'acquisition de signaux de radionavigation exécuté par un récepteur ayant un canal pour la corrélation du signal entrant avec une porteuse locale en phase en en quadrature de phase, un canal pour la corrélation du signal entrant avec une sous-porteuse locale en phase en en quadrature de phase et un canal pour la corrélation du signal entrant avec les codes locaux. L'article « Analysis of Non Ambiguous BOC Signal Acquisition Performance », 17th ION GNSS International Technical Meeting of the Satellite Division of the Institute of Navigation, Washington, DC, US, 21 septembre 2004 (Vincent Heiries et autres), analyse plusieurs methods permettant d'acquérir et de poursuivre un signal de type BOC de manière no équivoque.

Certains signaux de radionavigation portent des codes d'étalement à période beaucoup plus longue (de préférence au moins 10 fois, voire 100 ou 1000, plus longue) que le temps de corrélation (c.-à-d. le temps entre les bornes de l'intégration cohérente faisant partie de l'opération de corrélation). Dans le contexte du présent document, de tels codes seront appelés « à période quasi-infinie ». Les procédés d'acquisition traditionnels expliqués ci-dessus ne s'appliquent que partiellement à l'acquisition de signaux de radionavigation à codes d'étalement à période quasi-infinie. Si la période du code est du même ordre de grandeur que le temps de corrélation (quelques millisecondes), il suffit de charge le code dans un registre et de calculer sa corrélation avec le signal de radionavigation pour différents décalages du signal. En effet, si le signal porte le code testé, on est sûr d'obtenir un pic de corrélation au plus tard lorsqu'on aura décalé le signal d'une période de code. Si on applique la même stratégie pour l'acquisition de signaux portant des codes à période longue, on risque de devoir attendre très longtemps avant de tomber sur un pic de corrélation. Il est donc nécessaire d'adopter une autre stratégie d'acquisition pour ces signaux.

**Objet de l'invention**

Un objet de la présente invention est de proposer un procédé amélioré pour l'acquisition de signaux de radionavigation portant des codes d'étalement à période quasi-infinie.

**Description générale de l'invention**

Selon l'invention, un procédé d'acquisition d'un signal de radionavigation portant un code d'étalement à période quasi-infinie, comprend l'échantillonnage du signal de radionavigation en bande de base sur une ligne à retard et la corrélation du signal de radionavigation sur la ligne à retard avec une réplique locale du code d'étalement. D'une corrélation à l'autre, le signal échantillonné est déplacé sur la ligne à retard (tandis que la réplique locale de code reste généralement fixe). Les résultats des corrélations permettent ainsi d'identifier l'écart temporel entre le code d'étalement du signal de radionavigation entrant et la réplique locale du code d'étalement dans un espace de recherche d'alignement temporel. Le procédé selon l'invention se distingue par le fait que pour réaliser la corrélation du signal de radionavigation en bande de base avec la réplique locale du code d'étalement, plusieurs séquences du code d'étalement sont générées, ces séquences du code d'étalement étant de même durée, égale à la durée du signal de radionavigation échantillonnée sur la ligne à retard, et associées à des plages de temps consécutives dans l'espace de recherche d'alignement temporel. Chacune des séquences du code d'étalement est corrélée avec le signal de radionavigation échantillonné dans une opération de corrélation respective, ces opérations de corrélation étant exécutées en parallèle pour les différentes séquences de code d'étalement. La corrélation du signal de radionavigation en bande de base avec la réplique locale du code d'étalement est réalisée de préférence à l'aide d'un filtre adapté.

On notera que les différents segments de code sont corrélés avec la même séquence d'échantillons du signal de radionavigation. Comme chaque séquence du code d'étalement correspond à une autre plage de recherche dans l'espace de recherche d'alignement temporel entre le code d'étalement et sa réplique locale, on réalise en fait plusieurs recherches d'alignement temporel parallèles dans une plage de recherche globale considérablement élargie, ce qui réduit notablement le temps moyen pour acquérir le signal de radionavigation.

L'échantillonnage du signal de radionavigation en bande de base sur la ligne à retard comprend de préférence la représentation du signal de radionavigation par une composante en phase et une composante en quadrature de phase, toutes les deux échantillonnées sur une voie respective de la ligne à retard. Dans ce cas, chacune des séquences du code d'étalement est corrélée avec la composante en phase et avec la composante en quadrature de phase. De préférence, les voies des composantes en phase et en quadrature de phase sont entrelacées sur la ligne à retard, de sorte à ce que les séquences du code d'étalement soient corrélées en alternance avec la composante en phase et avec la composante en quadrature de phase.

Il sera apprécié que le procédé selon l'invention puisse être adapté à l'acquisition d'un signal de radionavigation modulé par une sous-porteuse. Selon un mode de réalisation avantageux du procédé, les séquences de code générées sont modulées par une réplique locale de la sous-porteuse. Selon un autre mode de réalisation du procédé, l'échantillonnage du signal de radionavigation en bande de base sur la ligne à retard comprend la répartition du signal de radionavigation en la composante en phase du signal multipliée par une réplique locale de la sous-porteuse en phase, la composante en phase du signal multipliée par une réplique locale de la sous-porteuse en quadrature de phase, la composante en quadrature de phase du signal multipliée par une réplique locale de la sous-porteuse en phase et la composante en quadrature de phase du signal multipliée par une réplique locale de la sous-porteuse en quadrature de phase. Ces composantes sont avantageusement échantillonnées sur des voies respectives de la ligne à retard et chacune des séquences du code d'étalement est corrélée avec chacune des composantes. Les voies des composantes sont de préférence entrelacées sur la ligne à retard dans un ordre prédéterminé, de sorte à ce que chacune des séquences du code d'étalement est corrélée en alternance avec les différentes composantes.

Le procédé selon l'invention visant l'acquisition de signaux portant un code d'étalement à période quasi-infinie, il n'est pas possible d'un point de vue pratique de réaliser les corrélations avec toujours les mêmes séquences de code (comme dans le cas de codes à période courte) et d'attendre qu'un pic de corrélation se présente. De préférence, les séquences du code d'étalement sont générées sur base d'une indication de temps GNSS fournie par une aide externe en temps, p.ex. un signal de synchronisation externe. Une aide externe en temps peut être mise à disposition par exemple par un serveur NTP (de l'anglais : « network time protocol ») via une liaison de télécommunication (filaire ou sans fil). De préférence, la précision de l'aide externe en temps est au moins du même ordre de grandeur que la plage de capture du procédé, c.-à-d. la durée de la ligne à retard multipliée par le nombre de séquences de code corrélées en parallèle avec le signal sur la ligne à retard.

Un aspect de l'invention concerne un récepteur GNSS configuré pour acquérir un signal de radionavigation portant un code d'étalement à période quasi-infinie. Le récepteur comprend des moyens d'échantillonnage conçus pour échantillonner le signal de radionavigation en bande de base sur une ligne à retard, et des moyens de corrélation pour corréler le signal de radionavigation sur la ligne à retard avec une réplique locale du code d'étalement en vue d'une identification d'un écart temporel entre le code d'étalement du signal de radionavigation et la réplique locale du code d'étalement dans un espace de recherche d'alignement temporel. Les moyens de corrélation sont conçus pour générer plusieurs séquences du code d'étalement, les séquences du code d'étalement étant de même durée, égale à la durée du signal de radionavigation échantillonnée sur la ligne à retard, et associées à des plages de temps consécutives dans l'espace de recherche d'alignement temporel, et pour corréler chacune des séquences du code d'étalement avec le signal de radionavigation échantillonné lors d'une opération de corrélation respective, les moyens de corrélation exécutant les opérations de corrélation en parallèle pour les différentes séquences de code d'étalement. Le récepteur peut en outre être configuré pour la mise en oeuvre des différents modes de réalisations du procédé tels que décrits plus haut.

Un autre aspect de l'invention concerne un programme d'ordinateur destiné à être exécuté dans un récepteur de géopositionnement, le programme d'ordinateur étant configuré de sorte à mettre en oeuvre le procédé lorsque le programme est exécuté dans le récepteur. Le programme d'ordinateur peut être intégré dans un produit de programme d'ordinateur comprenant un support d'information (disque dur, CD-ROM, clé USB ou autre) sur lequel le programme est stocké ou un signal dans lequel le programme est encodé selon un certain protocole (p.ex. TCP/IP, éthernet, Bluetooth, etc.)

## Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:

Fig.1:    est un schéma d'ensemble d'un récepteur GNSS doté d'un module d'acquisition de signaux de radionavigation ;

Fig. 2:    est un schéma des interfaces de l'étage RF/IF ;

Fig. 3:    est un schéma de l'étage de traitement de signal ;

Fig. 4:    est un schéma des interfaces de l'étage d'horloge GNSS ;

Fig. 5    est un schéma des interfaces de l'étage de commande et de contrôle ;

Fig. 6    est un schéma illustrant la numérisation du signal en fréquence intermédiaire ;

Fig. 7    est un schéma d'une partie d'un module de corrélation ;

Fig. 8    est un schéma d'une partie d'un autre module de corrélation permettant l'entrelacement de quatre voies différentes sur la ligne à retard ;

Fig. 9    est une représentation des fonctions de corrélation entre le signal sur la ligne à retard et des séquences de codes successives ;

Fig. 10    est un schéma d'une partie d'un module de corrélation alternatif au module de la figure 8, dans lequel les quatre voies sont traitées en parallèle.

## Description d'une exécution préférée

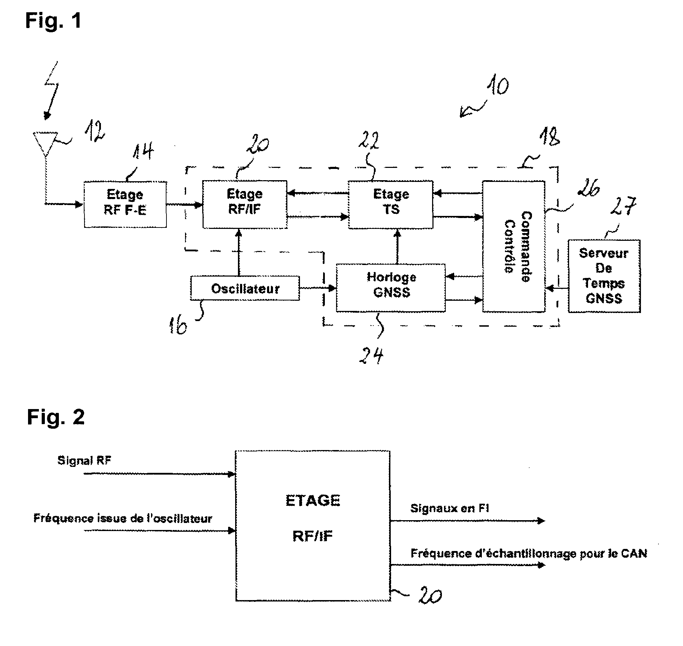

Un exemple de module d'acquisition de signaux de radionavigation est montré schématiquement à la figure 1 comme partie d'un récepteur GNSS. Le récepteur 10 comprend une antenne 12, un étage radiofréquence14 (« front end »), un oscillateur 16 ainsi que le module d'acquisition 18, qui regroupe un étage de conversion RF/IF 20, un étage de traitement de signal 22, un étage d'horloge 24 et un étage de commande et de contrôle 26. Le module d'acquisition reçoit un signal de synchronisation d'une aide externe en temps, représentée à la figure 1 comme serveur de temps GNSS 27 (qui ne fait normalement pas partie du récepteur GNSS mais qui est en liaison de communication avec celui-ci).

L'étage RF/IF 20 est montré plus en détail à la figure 2. Il assure la transposition des signaux de radionavigation reçus en bande radiofréquence (RF) vers une fréquence intermédiaire (IF, de l'anglais « intermediate frequency »), la génération de la fréquence d'échantillonnage pour les convertisseurs analogiques-numériques (CAN) de l'étage de traitement de signal 22 en aval, le maintien de la puissance du signal autour de la puissance de fonctionnement optimale du CAN ainsi que le rejet d'interférences en dehors des bandes de fréquences qui sont d'intérêt.

Les interfaces de l'étage RF/IF 20 sont, en entrée :

o un signal RF contenant les signaux de radionavigation, et

o une fréquence de référence provenant de l'oscillateur.

En sortie, l'étage RF/IF 20 produit:

o un signal à la fréquence intermédiaire contenant les signaux de radionavigation et
o un signal qui sert de fréquence d'échantillonnage pour le CAN de l'étage de traitement de signal 22.

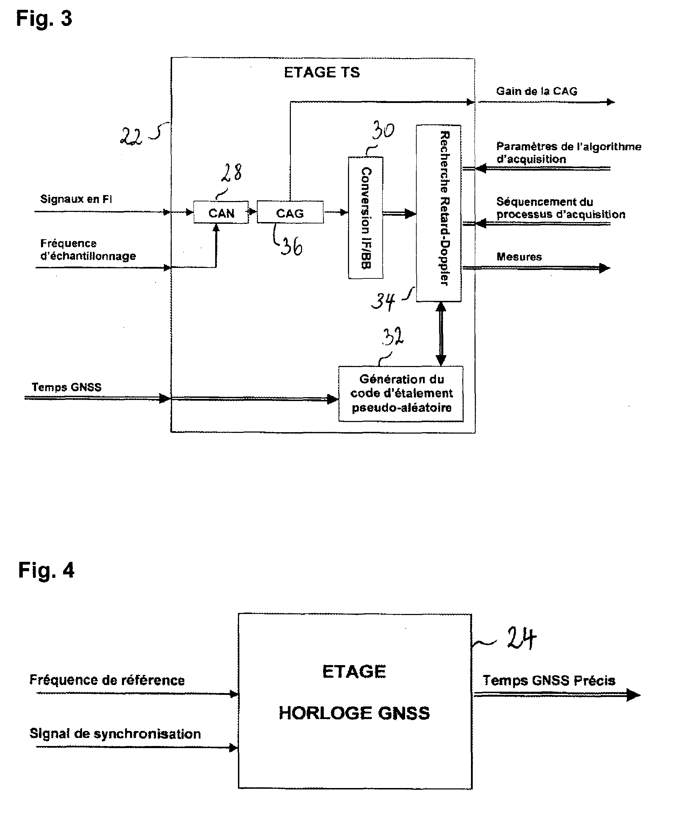

Un schéma de l'étage de traitement de signal (TS) 22 est montré à la figure 3. L'étage de traitement de signal 22 réalise les fonctionnalités suivantes :

o la numérisation, dans un CAN 28, du signal reçu en fréquence intermédiaire,

o la conversion de ce signal en bande de base (BB) à l'aide d'un convertisseur de fréquence IF/BB 30,

o la génération, dans un générateur de code 32, de la réplique locale du code d'étalement utilisée par le module de corrélation 34, et

o la recherche du retard et de la fréquence Doppler en phase d'acquisition à l'aide du module de corrélation 34.

La recherche dans l'espace retard/Doppler est de préférence effectuée en mode monocanal (l'alternative étant d'utiliser plusieurs canaux pour tester indépendamment plusieurs hypothèses Doppler à la fois), mais ce n'est pas une condition dans le contexte de l'invention. Le module de corrélation 34 produit en sortie la valeur de corrélation (mesure d'énergie) obtenue pour chacune des cases (ou cellules) de l'espace retard-Doppler. Les paramètres de l'algorithme d'acquisition sont la plage de recherche retard-Doppler, le seuil de détection (au-dessus duquel le signal est considéré acquis) en termes de rapport signal à bruit ainsi que les caractéristiques du signal de radionavigation, comme p.ex. le type de la modulation (BPSK, BOC ou autre), le numéro du code pseudo-aléatoire (ou le numéro du satellite), la manière dont il faut générer le code pseudo-aléatoire (par une séquence de code en mémoire, en utilisant un polynôme, et/ou en utilisant un algorithme cryptographique en cas de signaux cryptés).

L'étage d'horloge GNSS 24 (montré schématiquement à la figure 4) reçoit en entrée un signal de synchronisation sur le temps GNSS fourni par l'étage de commande et de contrôle 26 ainsi que le signal de référence de fréquence. A partir de ces entrées, l'étage d'horloge GNSS 24 produit un signal d'horloge GNSS précis, distribué notamment à l'étage de traitement de signal 22 qui se base sur ce signal pour produire les répliques internes des codes d'étalement.

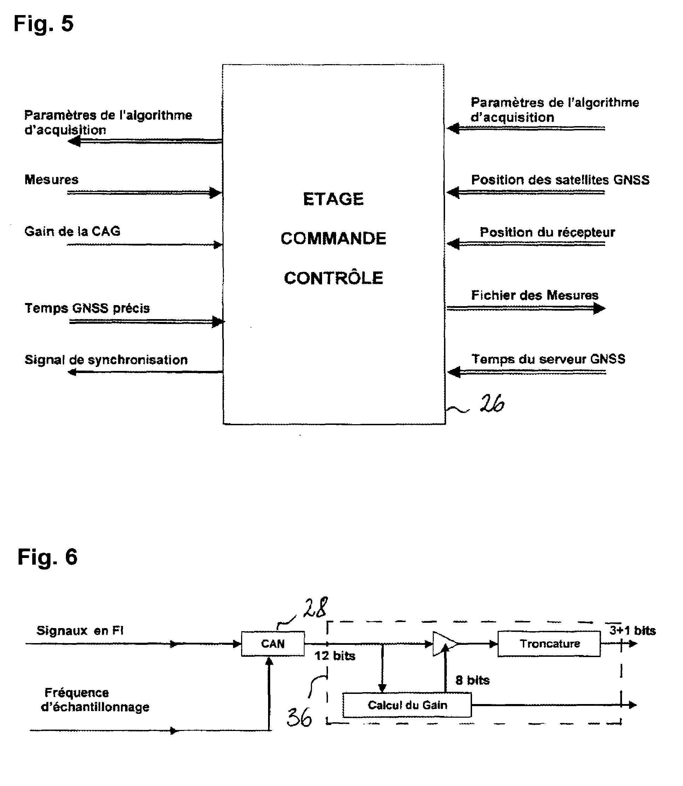

Les fonctionnalités de l'étage de commande et de contrôle 26 (figure 5) sont notamment :

o la saisie des paramètres de l'algorithme d'acquisition,

o la gestion du séquencement de l'étage de traitement de signal 22 (incluant p.ex. la sélection du nombre de corrélations non cohérentes, la sélection de la stratégie de recherche du Doppler, etc.),

o la réception et/ou la génération d'un signal de synchronisation sur le temps GNSS pour l'horloge GNSS interne,

o la génération d'un fichier qui contient les résultats des mesures effectuées lors de la phase d'acquisition,

o la génération d'un fichier qui indique le gain appliqué au niveau de la CAG en fonction du temps,

o optionnellement la saisie de la position des satellites GNSS (p.ex. à partir de données d'assistance et/ou du message de navigation), et

o optionnellement la saisie d'une estimation de la position du récepteur (résultant p.ex. d'une acquisition antérieure).

Comme montré aux figures 4 et 6, à l'entrée de l'étage de traitement de signal 22, le signal de radionavigation à acquérir est contenu dans un signal analogique à la fréquence intermédiaire (p.ex. 140 MHz). Le CAN 28 effectue une numérisation du signal entrant sur, par exemple, 12 bits, à une fréquence d'échantillonnage prédéfinie $f_e$ (p.ex. $f_e$=112 MHz). Ce signal numérisé est ensuite amplifié à l'aide d'un dispositif de contrôle automatique du gain (CAG) 36. Si, en aval du CAG 36, le signal est quantifié sur 4 bits (3 bits plus 1 bit de signe), 8 bits (12 bits - 4 bits) sont disponibles pour la réalisation d'une boucle de CAG, avec une plage de fonctionnement en puissance de 48 dB (= 20 log($2^8$)) avec une échelle linéaire. La commande de la boucle CAG est proportionnelle à l'amplitude du signal issu du CAN 28 moyennée sur une durée égale à la constante de temps de la boucle CAG.

Le convertisseur de fréquence IF/BB 30 réalise la conversion du signal échantillonné issu du CAG 36 en bande de base complexe, c.-à-d. sur deux voies en quadrature de phase l'une par rapport à l'autre (la voie I, dite « en phase », et la voie Q, dite en quadrature »). Les échantillons du signal issu du CAG 36 sont distribués en alternance sur les deux voies I et Q, qui sont multipliés par les suites (1, -1, ...) pour la voie I et (-1, 1, ...) pour la voie Q. Chaque voie reçoit donc des échantillons au rythme $f_e/2$, dont chaque deuxième est inversé. On effectue ensuite un filtrage passe-bas sur chacune des deux voies. En voie I, on obtient ainsi la partie « en phase » (réelle) à la fréquence d'échantillonnage $f_e/2$, alors qu'en voie Q, on a la partie « en quadrature de phase » ou, plus brièvement, « en quadrature » (imaginaire) à la fréquence d'échantillonnage $f_e/2$. Cependant, les deux voies sont décalées l'une par rapport à l'autre d'un écart temporel de $1/f_e$. Pour compenser ce décalage entre les voies I et Q, on effectue un filtrage passe-bas sur chaque voie (avec une fréquence de coupure inférieure ou égale à $f_e/4$). Pour appliquer un décalage Doppler, on effectue ensuite une multiplication par une exponentielle complexe, fournie par exemple par un oscillateur à commande numérique. Cette multiplication permet de centrer la plage de recherche Doppler.

**Cas d'une modulation à sous-porteuse (Option 1)**

Si le signal de radionavigation comprend une modulation à sous-porteuse, p.ex. une modulation BOC, la corrélation entre le signal entrant et une réplique locale de code sans sous-porteuse ne montre pas de pic pour le retard 0 (c.-à-d. au moment ou le code sur le signal coïncide avec sa réplique locale) à cause de la sous-porteuse présente sur le signal entrant. Pour obtenir le pic de corrélation pour le retard 0, il convient donc de « supprimer » la sous-porteuse sur le signal entrant, ce qui revient à effectuer la corrélation entre le signal entrant et une réplique locale de code avec sous-porteuse.

A cette fin, chacune des voies I et Q du signal en bande de base est multipliée par la sous-porteuse en phase, donnant les voies I-SPI et Q-SPI, respectivement, ainsi que, parallèlement, par la sous-porteuse en quadrature, donnant les voies I-SPQ et Q-SPQ, respectivement. En aval de la multiplication, sur chaque voie, on opère un filtrage autour du lobe principal de la sous-porteuse. Optionnellement, les signaux des voies I-SPI, Q-SPI, I-SPQ et Q-SPQ sont requantifiés (par exemple, sur 2 bits). Les différentes composantes du signal à corréler (c.-à-d les signaux sur les voies I-SPI, I-SPQ, Q-SPI et Q-SPQ) sont de préférence entrelacées sur une unique ligne à retard. Ceci a l'avantage qu'une seule structure de corrélateurs peut traiter les différentes composantes du signal. Les composantes du signal sont ensuite corrélées chacune avec la réplique locale du code d'étalement. Les résultats des corrélations peuvent ensuite être recombinés dans un discriminateur afin de détecter le pic de corrélation.

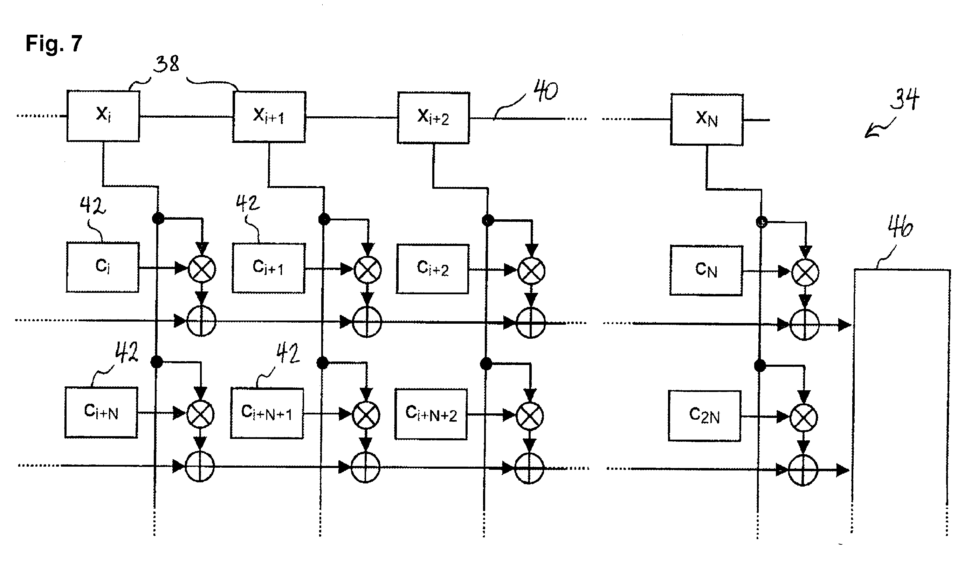

Pour expliquer le procédé de corrélation plus en détail, nous allons d'abord nous limiter à une seule composante, notée x(t) du signal de radionavigation entrant (x(t) est donc choisie parmi I-SPI(t), I-SPQ(t), Q-SPI(t) et Q-SPQ(t) dans le cas de l'option 1). La figure 7 montre le schéma d'une partie d'un module de corrélation 34 tel qu'il peut être utilisé dans le cadre de la présente invention. A un instant t, les échantillons du signal x, présents dans les différentes cellules de mémoire 38 de la ligne à retard 40, sont $x_1(t)=x(t-T_{coh}+Te')$, $x_2(t)=x(t-T_{coh}+2Te')$, ..., $x_N(t)=x(t)=x(t-T_{coh}+NTe')$ où

o $T_{coh}$ est le temps d'intégration cohérente de la corrélation, égal à la durée du signal échantillonné sur la ligne à retard 40 ;

o Te' est l'écart temporel entre deux échantillons 38 consécutifs du signal, égal à l'inverse de la fréquence d'échantillonnage fe' (qui est différente de la fréquence d'échantillonnage fe mentionnée plus haut et supérieure ou égale à deux fois le rythme de bribes du code pseudo-aléatoire), et

o N est le nombre d'échantillons 38 présents sur la ligne à retard 40 ; on a : $N=T_{coh}/Te'$.

La réplique locale du code d'étalement est générée par un générateur de code 32 (montré à la figure 3) à base du temps GNSS fourni par une aide externe en temps. A base du temps GNSS appliqué en entrée, le générateur de code 32 produit plusieurs séquences consécutives du code d'étalement, chacune de ces séquences ayant la longueur (le nombre d'échantillons 38 sur une voie) de la ligne à retard 40. On note $C^1$, $C^2$, ..., $C^m$ les différentes séquences du code d'étalement, m étant supérieur ou égal à 2 (p.ex. égal à 4). Alors $C^1=[c_1, c_2,..., c_N]$, $C^2=[C_{N+1}, C_{N+2},..., C_{2N}]$, ..., $C^m=[C_{(m-1)N+1}, C_{(m-1)N+2}, ..., c_{mN}]$, où $(c_i)_i=1,...,N$ désigne les échantillons de la réplique locale du code d'étalement échantillonné à la fréquence d'échantillonnage fe'. Les valeurs des échantillons de code sont 1 ou -1.

Les séquences de codes sont chargées dans les cellules 42 une mémoire de code respective, et chacune des séquences de code est corrélée avec le signal sur la ligne à retard.

A chaque pas de temps, on corrèle les différentes séquences de code $C^1$, $C^2$, ..., $C^m$ avec le signal sur la ligne à retard, c'est-à-dire on effectue les intégrations :

$$Corr^1(t) = \sum_{i=1}^{N} c_i x_i , \qquad\qquad \text{(Eq. 3)}$$

$$Corr^2(t) = \sum_{i=1}^{N} c_{i+N} x_i ,$$

$$\ldots$$

$$Corr^m(t) = \sum_{i=1}^{N} c_{i+(m-1)N} x_i .$$

D'une intégration à l'autre, le signal x est décalé sur la ligne à retard 40 tandis que la réplique locale du code, c.-à-d. chacune des séquences de code, reste fixe. En d'autres mots, les valeurs $c_i$, ..., $c_{mN}$ ne sont pas décalées dans les cellules 42 de la mémoire de code. En parallèle, le générateur de code charge le segment de code suivant ($C^{m+1}=[c_{mN+1}, c_{mN+2},..., c_{(m+1)N}]$) dans une mémoire de code de réserve (qui n'est pas montrée dans les figures). On notera que les différents segments de code sont corrélés avec la même partie du signal x. Il s'agit donc bien de m corrélations parallèles (associées à m hypothèses de temps espacées du temps de corrélation $T_{coh}=N \cdot Te'$) et non d'une corrélation unique, subdivisée en plusieurs corrélations plus courtes comme dans le document WO 2004/034604 A1. Toutefois, il est au choix de l'homme du métier d'utiliser l'approche du document WO 2004/034604 A1 dans le cadre de la présente invention. Dans ce cas, l'intervalle d'intégration est subdivisé en plusieurs parties égales pour chacune des séquences de code et on a donc les intégrations suivantes :

$$STC_1^1(t) = \sum_{i=1}^{N/n} c_i x_i , \; STC_2^1(t) = \sum_{i=N/n+1}^{2N/n} c_i x_i , \; ..., \; STC_n^1(t) = \sum_{i=N-N/n+1}^{N} c_i x_i \qquad \text{(Eq. 4)}$$

$$STC_1^2(t) = \sum_{i=1}^{N/n} c_{i+N} x_i , \; STC_2^2(t) = \sum_{i=N/n+1}^{2N/n} c_{i+N} x_i , \; ..., \; STC_n^1(t) = \sum_{i=N-N/n+1}^{N} c_i x_i$$

$$\ldots$$

$$STC_1^m(t) = \sum_{i=1}^{N/n} c_{i+(m-1)N} x_i , \; STC_2^m(t) = \sum_{i=N/n+1}^{2N/n} c_{i+(m-1)N} x_i , \; ..., \; STC_n^m(t) = \sum_{i=N-N/n+1}^{N} c_{i+(m-1)N} x_i$$

où n est un diviseur de N et $STC_k^l(t)$ est la k-ième corrélation à court terme (short term correlation) entre le signal entrant et la l-ième séquence de code d'étalement. On note que $Corr^l(t)=STC_1^l(t)+STC_2^l(t)+...+STC_n^l(t)$, pour $l=1, ..., m$.

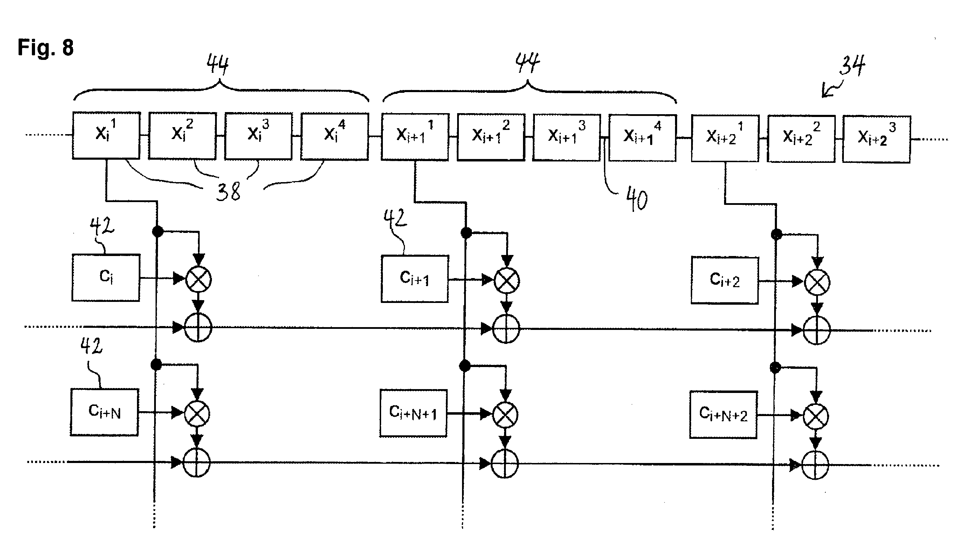

La figure 8 illustre le cas où il y a entrelacement des différentes composantes du signal entrant sur la ligne à retard 40, les N échantillons de respectivement 1-SPI(t), I-SPQ(t), Q-SPI(t) et Q-SPQ(t) se succèdent dans un ordre prédéfini. A un instant t, les échantillons présents sur la ligne à retard, sont, par exemple [I-SP$_1$(t)=I-SPI(t-T$_{coh}$+Te'), I-SPQ$_1$(t)= I-SPQ(t-T$_{coh}$+Te'), Q-SPI$_1$(t)=Q-SPI(t-T$_{coh}$+Te'), Q-SPQ$_1$(t)=Q-SPQ(t-T$_{coh}$+Te')], [I-SPI$_2$(t)=I-SPI(t-T$_{coh}$+2Te'), I-SPQ$_2$(t)= I-SPQ(t-T$_{coh}$+2Te'), Q-SPI$_2$(t)=Q-SPI(t-T$_{coh}$+2Te'), Q-SPQ$_2$(t)= Q-SPQ(t-T$_{coh}$+2Te')], ..., [I-SPI$_N$(t)=I-SPI(t), I-SPQ$_N$(t)= I-SPQ(t), Q-SPI$_N$(t)=Q-SPI(t), Q-SPQ$_N$(t)=Q-SPQ(t)], où les échantillons des différentes composantes du signal associés au même instant t ont été regroupés entre crochets pour faciliter la lecture. Les échantillons des différentes composantes qui sont associés au même instant t forment un « groupe d'échantillons » 44 sur la ligne à retard 40.

Pour le calcul des corrélations, les expressions indiquées plus haut peuvent être utilisées avec la substitution x = I-SPI, I-SPQ, Q-SPI ou Q-SPQ. A chaque pas de temps Te', on corrèle les composantes du signal sur la ligne à retard avec les différentes séquences de code C$^1$, C$^2$, ..., C$^m$. Dans le cas de quatre composantes de signal, la durée d'un cycle d'horloge de la ligne à retard 40 est de Te'/4 pour permettre le multiplexage temporel. Les échantillons sont décalés dans la ligne à retard 40 au rythme 4/Te'. Dans le premier quart du pas de temps Te', on réalise ainsi les corrélations entre les séquences de code et une première composante du signal (notée x$^1$ à la figure 8), dans le deuxième quart on réalise les corrélations entre les séquences de code et une deuxième composante (notée x$^2$) et ainsi de suite, jusqu'à ce que le signal sur la ligne à retard 40 ait été décalé sur la ligne à retard 40 d'un groupe d'échantillons 44 complet.

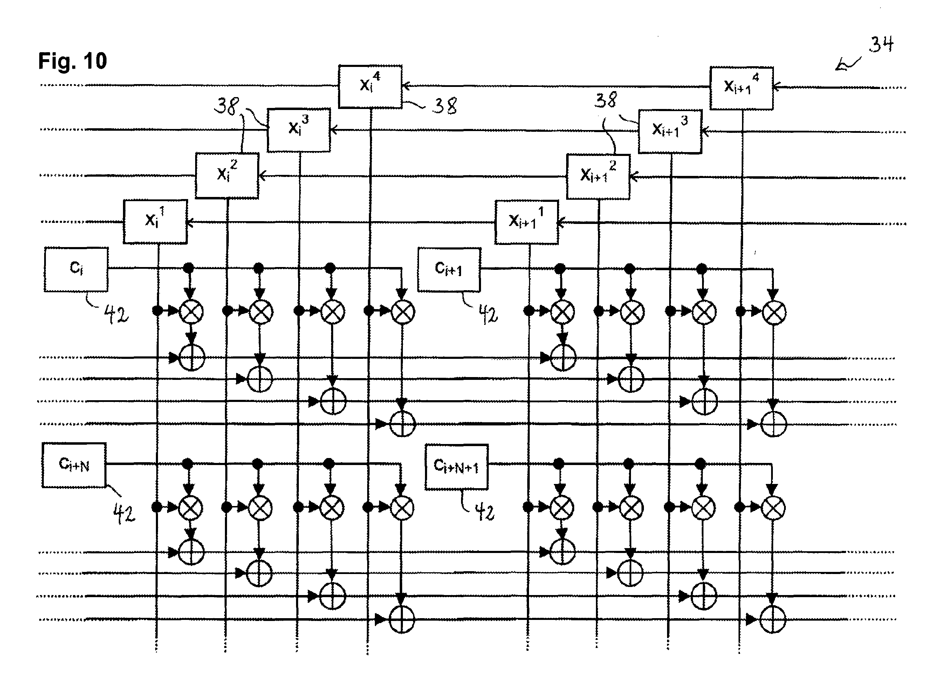

La figure 10 montre une architecture de corrélateurs servant à corréler différentes composantes du signal en parallèle. La ligne à retard 40 comprend dans ce cas quatre voies physiques 40$^1$, 40$^2$, 40$^3$, 40$^4$ de longueur N, portant les échantillons 38 de respectivement I-SPI(t), I-SPQ(t), Q-SPI(t) et Q-SPQ(t). Un multiplexage temporel des différentes composantes sur une voie physique unique comme à la figure 8 n'est donc pas nécessaire.

Les résultats de corrélation (Corr$^1$(t), ..., Corr$^m$(t) ou les STC$_k^l$(t)) entrelacés ou non sont amenés à un étage d'intégration non cohérente 46. Dans le cas où on ne traite qu'une plage Doppler à la fois, on calcule ainsi :

$$S_k(t) = \sum_{j=1}^{M} \left[ Corr^{(k-j) \bmod m+1}(t - (j-1)T_{coh}) \right]^2 \text{, pour tout k=1, ..., m,} \qquad \text{(Eq. 5)}$$

où M désigne le nombre d'intégrations non cohérentes. On a donc :

$$S_1(t) = (Corr^1(t))^2 + (Corr^m(t - T_{coh}))^2 + ... + (Corr^{(1-M) \bmod m+1}(t - (M-1)T_{coh}))^2$$

$$S_2(t) = (Corr^2(t))^2 + (Corr^1(t - T_{coh}))^2 + ... + (Corr^{(2-M) \bmod m+1}(t - (M-1)T_{coh}))^2$$

...

$$S_m(t) = (Corr^m(t))^2 + (Corr^{m-1}(t - T_{coh}))^2 + ... + (Corr^{(m-M) \bmod m+1}(t - (M-1)T_{coh}))^2 .$$

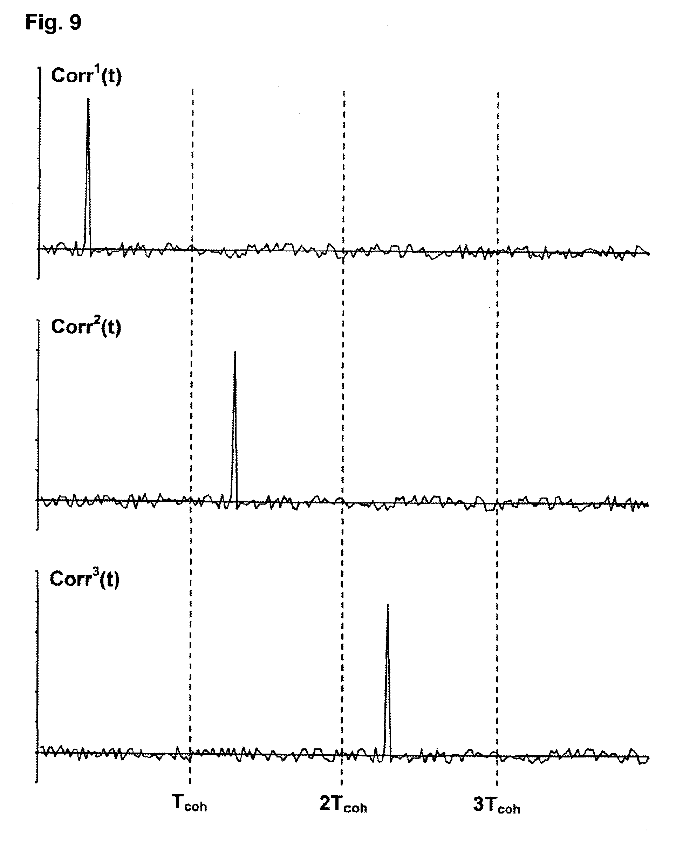

L'équation 5 s'explique par le fait que si on a un pic de corrélation entre le signal et la première séquence du code à un instant t, on a aussi un pic de corrélation entre le signal et la deuxième séquence du code à l'instant t+T$_{coh}$. La figure 9 représente cette situation pour Corr$^1$, Corr$^2$ et Corr$^3$ en fonction du temps. On tient compte de ceci dans l'équation 5 en intégrant de manière non cohérente sur les M dernières périodes d'intégration cohérente (de durée T$_{coh}$ correspondant à la longueur de la ligne à retard).

Dans le cas de plusieurs plages Doppler à traiter en parallèle, l'étage d'intégration non cohérente 46 comprend un étage de transformation de Fourier rapide qui reçoit en entrée les vecteurs [STC$_1^1$, STC$_2^1$, STC$_3^1$,..., STC$_n^1$], [STC$_1^2$, STC$_2^2$, STC$_3^2$,..., STC$_n^2$], ..., et [STC$_1^m$, STC$_2^m$, STC$_3^m$,.... STC$_n^m$]. Les résultats de corrélation (les STC) peuvent être requantifiés avant la FFT. On réalise la FFT de préférence en employant une technique de bourrage de zéros (en anglais : « zero padding ») pour éviter des pertes. En sortie de l'étage FFT, les vecteurs transformés peuvent être requantifiés. L'intégration non cohérente proprement dite est ensuite réalisée de manière analogue à l'équation 5, pour chaque plage Doppler.

La recomposition de l'énergie est effectuée par sommation non-cohérente des différentes composantes du signal (I-SPI, I-SPQ, Q-SPI et Q-SPQ).

On peut appliquer une compensation du décalage code-Doppler en jouant sur le temps de propagation de groupe d'un filtre numérique à prévoir en aval des corrélateurs et, le cas échéant en aval de l'étage FFT.

La détection est réalisée par comparaison de l'énergie recomposée avec un seuil de détection : lorsque l'énergie dépasse le seuil de détection, il y a une corrélation significative entre le signal de radionavigation reçu et sa réplique locale, et le signal de radionavigation est réputé acquis. Le seuil de détection est de préférence ajusté à l'opération en fonction du niveau de bruit actuel et des performances souhaitées. Un rapport signal à bruit minimum (SNRmin) peut être fixé à partir des différents indicateurs de performance prédéfinis comme la probabilité de détection, la probabilité de fausse alerte, la puissance de signaux interférents intra-système, les intercorrélations entre codes pseudo-aléatoires intra-système, le temps d'intégration cohérente ($T_{coh}$) et du nombre d'intégrations non cohérentes (M). Le niveau de bruit est détecté à l'opération, p.ex. en calculant une moyenne de plusieurs valeurs d'énergie éloignées du maximum global. On obtient le seuil de détection par multiplication du rapport signal à bruit minimum avec le niveau de bruit actuel.

Pendant que le récepteur effectue les opérations de corrélation, les mémoires de code sont mises à jour successivement. Au bout des N pas de temps, la mémoire de code contenant le segment de code « le plus ancien », en l'occurrence ici $C^1$, est libérée et la corrélation est reprise pour les m segments de code $C^2$, $C^3$, ..., $C^{m+1}$. En parallèle, le générateur de code charge le segment de code suivant ($C^{m+2}=[C_{(m+1)N+1}, c_{(m+1)N+2},..., c_{(m+2)N}]$) dans la nouvelle mémoire de réserve, c'est-à-dire la mémoire libérée auparavant. De cette manière, m segments consécutifs de code sont parallèlement corrélés avec la composante du signal sur la ligne à retard. Par le traitement en parallèle, la plage de recherche temporelle se trouve considérablement agrandie. Il en résulte que plus de tolérance peut être acceptée en ce qui concerne la précision de l'hypothèse de temps.

Si un pic de corrélation n'est pas détecté dans la plage de recherche temporelle, cela signifie que l'hypothèse de temps sur base de laquelle les séquences de code ont été calculées était trop imprécise. Dans ce cas, le générateur de code réinitialise les différentes mémoires de code sur la base d'une nouvelle hypothèse de temps.

## Cas d'une modulation à sous-porteuse (Option 2)

Au lieu de « supprimer » la sous-porteuse en subdivisant les voies I et Q du signal entrant en les voies I-SPI, I-SPQ, Q-SPI et Q-SPQ, on peut alternativement corréler les voies I et Q avec des séquences de code d'étalement modulées par la sous-porteuse.

Les composantes I et Q sont de préférence entrelacées sur une unique ligne à retard. Au lieu des quatre échantillons par groupe d'échantillons du cas précédent, on n'en a ici que deux. Les composantes du signal sont ensuite corrélées chacune avec la réplique locale de la forme d'onde d'étalement comprenant aussi bien le code que la sous-porteuse.

Comme dans le cas de l'option 1, la réplique locale du code d'étalement est générée par un générateur de code 32 à base du temps GNSS fourni par une aide externe en temps. A base du temps GNSS appliqué en entrée, le générateur de code produit plusieurs séquences consécutives du code d'étalement, chacune de ces séquences ayant la longueur (le nombre d'échantillons) de la ligne à retard et portant une modulation de sous-porteuse. Les valeurs des échantillons de code restent 1 ou -1 dans le cas d'une sous-porteuse binaire (à 2 états). Cependant, dans le cas d'une sous-porteuse multi-niveaux, les échantillons de code peuvent prendre d'autres valeurs.

Les séquences de codes sont chargées dans une mémoire de code respective, et chacune des séquences de code est corrélée avec les composantes I et Q du signal sur la ligne à retard. Les équations 3 et 4 restent valides avec les substitutions x(t)=I(t) ou x(t)=Q(t) et où $[c_1, c_2, ..., c_{mN}]$ désigne les échantillons de la réplique locale du code d'étalement modulé par la sous-porteuse.

## Cas d'une modulation sans sous-porteuse

On suppose ici que la modulation ne contient pas de sous-porteuse, c.-à-d. le signal entrant contient la porteuse qui est modulée par le code d'étalement, p.ex. au moyen d'une modulation BPSK (de l'anglais « binary phase shift keying » - modulation par déplacement de phase binaire), QPSK (de l'anglais « quadrature phase shift keying » - modulation par déplacement de phase à quatre états), etc.

Dans les cas de modulations sans sous-porteuse, les voies I et Q sont corrélées avec des séquences de code d'étalement.

Comme dans les cas précédents, les composantes I et Q sont de préférence entrelacées sur une unique ligne à retard. Les composantes du signal sont ensuite corrélées chacune avec la réplique locale du code d'étalement.

La réplique locale du code d'étalement est générée par un générateur de code à base du temps GNSS fourni par une aide externe en temps. A base du temps GNSS appliqué en entrée, le générateur de code produit plusieurs séquences consécutives du code d'étalement, chacune de ces séquences ayant la longueur (le nombre d'échantillons) de la ligne à retard.

Les séquences de codes sont chargées dans une mémoire de code respective, et chacune des séquences de code est corrélée avec les composantes I et Q du signal sur la ligne à retard. Les équations 3 et 4 restent valides avec les substitutions x(t)=I(t) ou x(t)=Q(t) et où $[c_1, c_2, ..., c_{mN}]$ désigne les échantillons de la réplique locale du code d'étalement.

**EP 2 323 271 B1**

Notons que même dans un cas de modulation à sous-porteuse, on pourrait envisager corréler les voies I et Q du signal en bande de base avec la réplique locale du code d'étalement sans élimination de la sous-porteuse, p.ex. pour implémenter un schéma d'acquisition et de poursuite tel que décrit dans le document US 2008/0159198.

**Légende:**

| | |
|---|---|
| 10 | Récepteur |
| 12 | Antenne |
| 14 | Etage radiofréquence |
| 16 | Oscillateur |
| 18 | Module d'acquisition |
| 20 | Etage de conversion RF/IF |
| 22 | Etage de traitement de signal |
| 24 | Etage d'horloge |
| 26 | Etage de commande et de contrôle |
| 27 | Serveur de temps GNSS |
| 28 | Convertisseur analogique-numérique |
| 30 | Convertisseur de fréquence IF/BB |
| 32 | Générateur de code |
| 34 | Module de corrélation |
| 36 | Dispositif de contrôle automatique du gain |
| 38 | Cellule de mémoire de la ligne à retard |
| 40 | Ligne à retard |
| 42 | Cellule de mémoire de code |
| 44 | Groupe d'échantillons |
| 46 | Etage d'intégration non cohérente |

**Revendications**

1. Procédé d'acquisition d'un signal de radionavigation portant un code d'étalement à période au moins 10 fois plus longue que le temps de corrélation, c.-à-d. le temps entre les bornes de l'intégration cohérente faisant partie de l'opération de corrélation, le procédé d'acquisition comprenant
   l'échantillonnage du signal de radionavigation en bande de base sur une ligne à retard (40), et
   la corrélation du signal de radionavigation sur la ligne à retard avec une réplique locale du code d'étalement pour identifier un écart temporel entre le code d'étalement du signal de radionavigation et la réplique locale du code d'étalement dans un espace de recherche d'alignement temporel ;
   **caractérisé en ce que**
   pour la corrélation du signal de radionavigation en bande de base avec la réplique locale du code d'étalement, m séquences du code d'étalement sont générées, m > 1, les séquences du code d'étalement étant de même durée, égale à la durée du signal de radionavigation échantillonnée sur la ligne à retard (40), et associées à des plages de temps consécutives dans l'espace de recherche d'alignement temporel,
   chacune des séquences du code d'étalement est corrélée avec le signal de radionavigation échantillonné dans une opération de corrélation respective, les m opérations de corrélation étant exécutées en parallèle pour les différentes séquences de code d'étalement, associés à m hypothèses de temps espacées du temps de corrélation.

2. Procédé selon la revendication 1, dans lequel l'échantillonnage du signal de radionavigation en bande de base sur la ligne à retard (40) comprend la répartition du signal de radionavigation en une composante en phase et une composante en quadrature de phase échantillonnées sur des voies respectives de la ligne à retard (40), et dans lequel chacune des séquences du code d'étalement est corrélée avec la composante en phase et avec la composante en quadrature de phase.

3. Procédé selon la revendication 2, dans lequel les voies des composantes en phase et en quadrature de phase sont entrelacées sur la ligne à retard (40), et dans lequel chacune des séquences du code d'étalement est corrélée en alternance avec la composante en phase et avec la composante en quadrature de phase.

**4.** Procédé selon la revendication 1, dans lequel le signal de radionavigation est modulé par une sous-porteuse.

**5.** Procédé selon la revendication 4, dans lequel les séquences de code générées sont modulées par une réplique locale de la sous-porteuse.

**6.** Procédé selon la revendication 4, dans lequel l'échantillonnage du signal de radionavigation en bande de base sur la ligne à retard (40) comprend la répartition du signal de radionavigation en une composante en phase multipliée par une réplique locale de la sous-porteuse en phase, une composante en phase multipliée par une réplique locale de la sous-porteuse en quadrature de phase, une composante en quadrature de phase multipliée par une réplique locale de la sous-porteuse en phase et une composante en quadrature de phase multipliée par une réplique locale de la sous-porteuse en quadrature de phase, les composantes étant échantillonnées sur des voies respectives de la ligne à retard (40), et dans lequel chacune des séquences du code d'étalement est corrélée avec chacune des composantes.

**7.** Procédé selon la revendication 6, dans lequel les voies des composantes sont entrelacées sur la ligne à retard (40), et dans lequel chacune des séquences du code d'étalement est corrélée en alternance avec les différentes composantes.

**8.** Procédé selon l'une quelconque des revendications 1 à 7, dans lequel la corrélation du signal de radionavigation en bande de base avec la réplique locale du code d'étalement est réalisée avec un filtre adapté.

**9.** Procédé selon l'une quelconque des revendications 1 à 8, dans lequel les séquences du code d'étalement sont générées sur base d'une indication de temps GNSS fournie par une aide externe en temps (27).

**10.** Récepteur (10) destiné à l'acquisition d'un signal de radionavigation portant un code d'étalement à période au moins 10 fois plus longue que le temps de corrélation c.-à-d. le temps entre les bornes de l'intégration cohérente faisant partie de l'opération de corrélation, comprenant
des moyens d'échantillonnage (28, 30) conçus pour échantillonner le signal de radionavigation en bande de base sur une ligne à retard (40), et
des moyens de corrélation (34) pour corréler le signal de radionavigation sur la ligne à retard (40) avec une réplique locale du code d'étalement en vue d'une identification d'un écart temporel entre le code d'étalement du signal de radionavigation et la réplique locale du code d'étalement dans un espace de recherche d'alignement temporel ;
**caractérisé en ce que**
les moyens de corrélation (34) sont conçus
pour générer m séquences du code d'étalement, m>1, les séquences du code d'étalement étant de même durée, égale à la durée du signal de radionavigation échantillonnée sur la ligne à retard (40), et associées à des plages de temps consécutives dans l'espace de recherche d'alignement temporel,
et pour corréler chacune des m séquences du code d'étalement avec le signal de radionavigation échantillonné lors d'une opération de corrélation respective, les moyen de corrélation exécutant les m opérations de corrélation en parallèle pour les différentes séquences de code d'étalement, associées à m hypothéses de temps espacées du temps de corrélation.

**11.** Récepteur (10) selon la revendication 10, configuré pour la mise en oeuvre du procédé selon l'une quelconque des revendications 2 à 9.

**12.** Programme d'ordinateur destiné à être exécuté dans un récepteur de géopositionnement (10), le programme d'ordinateur étant configuré de sorte à mettre en oeuvre le procédé selon l'une quelconque des revendications 1 à 9 lorsque le programme est exécuté dans le récepteur (10).

**Patentansprüche**

**1.** Verfahren zur Erfassung eines Funknavigationssignals mit einem Spreizcode mit mindestens 10 Mal längerer Periode als die Korrelationszeit, d.h. die Zeit zwischen den Grenzen der kohärenten Integration, die einen Teil der Korrelationsoperation darstellt, das Erfassungsverfahren umfassend
das Abtasten des Funknavigationssignals im Basisband auf einer Verzögerungsleitung (40) und
das Korrelieren des Funknavigationssignals auf der Verzögerungsleitung mit einer lokalen Spreizcodereplik zur Identifizierung eines zeitlichen Abstands zwischen dem Spreizcode des Funknavigationssignals und der lokalen Spreizcodereplik in einem Time Alignment-Suchraum;
**dadurch gekennzeichnet, dass**
für die Korrelation des Funknavigationssignals im Basisband mit der lokalen Spreizcodereplik m Spreizcodesequenzen erzeugt werden, mit m>1, wobei die Spreizcodesequenzen von gleicher Dauer sind, welche der Dauer des auf der Verzögerungsleitung (40) abgetasteten Funknavigationssignals entspricht, und aufeinander folgenden Zeitspannen im Time Alignment-Suchraum zugeordnet werden,
jede der Spreizcodesequenzen mit dem bei einer jeweiligen Korrelationsoperation abgetasteten Funknavigationssignal korreliert wird, wobei die m Korrelationsoperationen parallel für die einzelnen Spreizcodesequenzen durchgeführt werden, in Verbindung mit m auseinander liegenden Zeithypothesen für die Korrelationszeit.

2. Verfahren nach Anspruch 1, bei dem die Abtastung des Funknavigationssignals im Basisband auf der Verzögerungsleitung (40) die Aufteilung des Funknavigationssignals in eine Inphasekomponente und eine Quadraturphasekompente umfasst, die in den jeweiligen Kanälen der Verzögerungsleitung (40) abgetastet werden, und bei dem jede der Spreizcodesequenzen mit der Inphasekomponente und mit der Quadraturphasekomponente korreliert wird.

3. Verfahren nach Anspruch 2, bei dem die Kanäle der Inphase- und Quadraturphasekomponenten auf der Verzögerungsleitung (40) verschachtelt sind und bei dem jede der Spreizcodesequenzen abwechselnd mit der Inphasekomponente und mit der Quadraturphasekomponente korreliert wird.

4. Verfahren nach Anspruch 1, bei dem das Funknavigationssignal mit einem Unterträger moduliert wird.

5. Verfahren nach Anspruch 4, bei dem die erzeugten Codesequenzen mit einer lokalen Replik des Unterträgers moduliert werden.

6. Verfahren nach Anspruch 4, bei dem die Abtastung des Funknavigationssignals im Basisband auf der Verzögerungsleitung (40) die Aufteilung des Funknavigationssignals in eine mit einer lokalen Replik des phasengleichen Unterträgers multiplizierte Inphasekomponente, eine mit einer lokalen Replik des phasenverschobenen Unterträgers multiplizierte Inphasekomponente, eine mit einer lokalen Replik des phasengleichen Unterträgers multiplizierte Quadraturphasekomponente und eine mit einer lokalen Replik des phasenverschobenen Unterträgers multiplizierte Quadraturphasekomponente umfasst, wobei die Komponenten in den jeweiligen Kanälen der Verzögerungsleitung (40) abgetastet werden, und bei dem jede der Spreizcodesequenzen mit jeder der Komponenten korreliert wird.

7. Verfahren nach Anspruch 6, bei dem die Kanäle der Komponenten auf der Verzögerungsleitung (40) verschachtelt sind und bei dem jede der Spreizcodesequenzen abwechselnd mit den einzelnen Komponenten korreliert wird.

8. Verfahren nach irgendeinem der Ansprüche 1 bis 7, bei dem die Korrelation des Funknavigationssignals im Basisband mit der lokalen Spreizcodereplik mit einem geeigneten Filter durchgeführt wird.

9. Verfahren nach irgendeinem der Ansprüche 1 bis 8, bei dem die Spreizcodesequenzen auf Basis einer GNSS-Zeitangabe erzeugt werden, die von einer externen Zeithilfe (27) geliefert wird.

10. Empfänger (10) zur Erfassung eines Funknavigationssignals mit einem Spreizcode mit mindestens 10 Mal längerer Periode als die Korrelationszeit, d.h. die Zeit zwischen den Grenzen der kohärenten Integration, die einen Teil der Korrelationsoperation darstellt, umfassend Abtastmittel (28, 30), die zum Abtasten des Funknavigationssignals im Basisband auf einer Verzögerungsleitung (40) ausgebildet sind, und Korrelationsmittel (34) zum Korrelieren des Funknavigationssignals auf der Verzögerungsleitung (40) mit einer lokalen Spreizcodereplik zur Identifizierung eines zeitlichen Abstands zwischen dem Spreizcode des Funknavigationssignals und der lokalen Spreizcodereplik in einem Time Alignment-Suchraum;
**dadurch gekennzeichnet, dass**
die Korrelationsmittel (34) ausgebildet sind,
um m Spreizcodesequenzen zu erzeugen, mit m>1, wobei die Spreizcodesequenzen von gleicher Dauer sind, welche der Dauer des auf der Verzögerungsleitung (40) abgetasteten Funknavigationssignals entspricht, und aufeinander folgenden Zeitspannen im Time Alignment-Suchraum zugeordnet sind,
und um jede der m Spreizcodesequenzen mit dem bei einer jeweiligen Korrelationsoperation abgetasteten Funknavigationssignal zu korrelieren, wobei die Korrelationsmittel die m Korrelationsoperationen parallel für die einzelnen Spreizcodesequenzen durchführen, in Verbindung mit m auseinander liegenden Zeithypothesen für die Korrelationszeit.

**11.** Empfänger (10) nach Anspruch 10, welcher konfiguriert ist für die Durchführung des Verfahrens nach irgendeinem der Ansprüche 2 bis 9.

**12.** Computerprogramm für die Ausführung in einem positionsgebenden Empfänger (10), wobei das Computerprogramm so konfiguriert ist, dass das das Verfahren nach irgendeinem der Ansprüche 1 bis 9 bei Ausführung des Programms im Empfänger (10) durchgeführt wird.

**Claims**

**1.** A method for acquiring a radionavigation signal carrying a spreading code with a period that is at least 10 times longer than the correlation time, i.e. the time between the limits of the coherent integration that is part of the correlation operation, the acquisition method comprising sampling the radionavigation signal in baseband on a delay line (40), and correlating the radionavigation signal on the delay line with a local spreading code replica so as to identify a time delay between the spreading code of the radionavigation signal and the local spreading code replica in a temporal alignment search space;
**characterized in that**,
in order to correlate the baseband radionavigation signal with the local spreading code replica, m spreading code sequences are generated, m > 1, said spreading code sequences being of the same duration, equal to the duration of the radionavigation signal sampled on the delay line (40), and associated with consecutive time ranges in the temporal alignment search space,
each of the spreading code sequences is correlated with the sampled radionavigation signal in a respective correlation operation, said m correlation operations being executed in parallel for the different spreading code sequences associated with m time hypotheses spaced by the correlation time.

**2.** A method according to claim 1, wherein the sampling of the radionavigation signal in baseband on the delay line (40) comprises the splitting of the radionavigation signal into an in-phase component and a quadrature phase component sampled on the respective channels of the delay line (40), and wherein each of the spreading code sequences is correlated with the in-phase component and the quadrature phase component.

**3.** A method according to claim 2, wherein the channels of the in-phase and quadrature phase components are interleaved on the delay line (40), and wherein each of the spreading code sequences is correlated alternately with the in-phase component and the quadrature phase component.

**4.** A method according to claim 1, wherein the radionavigation signal is modulated by a sub-carrier.

**5.** A method according to claim 4, wherein the generated code sequences are modulated by a local replica of the sub-carrier.

**6.** A method according to claim 4, wherein the sampling of the radionavigation signal in baseband on the delay line (40) comprises the splitting of the radionavigation signal into an in-phase component multiplied by a local replica of the in-phase sub-carrier, an in-phase component multiplied by a local replica of the quadrature phase sub-carrier, a quadrature phase component of the signal multiplied by a local replica of the in-phase sub-carrier and a quadrature phase component of the signal multiplied by a local replica of the quadrature phase sub-carrier, the components being sampled on respective channels of the delay line (40), and wherein each of the spreading code sequences is correlated with each of the components.

**7.** A method according to claim 6, wherein the component channels are interleaved on the delay line (40), and wherein each spreading code sequence is correlated alternately with the different components.

**8.** A method according to any one of claims 1 to 7, wherein the correlation of the baseband radionavigation signal with the local spreading code replica is carried out with a matched filter.

**9.** A method according to any one of claims 1 to 8, wherein the spreading code sequences are generated on the basis of an indication of GNSS time provided by an external time provider (27).

**10.** A receiver (10) for acquiring a radionavigation signal carrying a spreading code with a period that is at least 10 times longer than the correlation time, i.e. the time between the limits of the coherent integration that is part of the correlation

EP 2 323 271 B1

operation, comprising

sampling means (28, 30) configured for sampling the radionavigation signal in baseband on a delay line (40), and correlation means (34) for correlating the radionavigation signal on the delay line (40) with a local spreading code replica so as to identify a temporal difference between the spreading code of the radionavigation signal and the local spreading code replica in a temporal alignment search space;
**characterized in that**
the correlation means (34) are configured

for generating m of spreading code sequences, m > 1, said spreading code sequences being of the same duration, equal to the duration of the radionavigation signal sampled on the delay line (40), and associated with the consecutive time ranges in the temporal alignment search space,

and for correlating each of the m spreading code sequences with the radionavigation signal sampled in a respective correlation operation, the correlation means executing the m correlation operations in parallel for the different spreading code sequences associated with m time hypotheses spaced by the correlation time.

11. A receiver (10) according to claim 10, configured for implementing the method according to any one of claims 2 to 9.

12. A computer program for execution in a geopositioning receiver (10), said computer program being configured to implement the method according to any one of claims 1 to 9 when the program is executed in the receiver (10).

## Fig. 1

## Fig. 2

## Fig. 3

ETAGE TS

Gain de la CAG

Signaux en FI

Fréquence
d'échantillonnage

CAN

CAG

Conversion IF/BB

Recherche Retard-Doppler

Paramètres de l'algorithme
d'acquisition

Séquencement du
processus d'acquisition

Mesures

Temps GNSS

Génération du
code d'étalement
pseudo-aléatoire

## Fig. 4

Fréquence de référence

Signal de synchronisation

ETAGE

HORLOGE GNSS

Temps GNSS Précis

# Fig. 5

Paramètres de l'algorithme
d'acquisition

Mesures

Gain de la CAG

Temps GNSS précis

Signal de synchronisation

ETAGE

COMMANDE

CONTRÔLE

Paramètres de l'algorithme
d'acquisition

Position des satellites GNSS

Position du récepteur

Fichier des Mesures

Temps du serveur GNSS

~ 26

# Fig. 6

28

Signaux en FI

CAN

12 bits

36

Fréquence
d'échantillonnage

Calcul du Gain

8 bits

Troncature

3+1 bits

**Fig. 7**

**Fig. 8**

**Fig. 9**

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006040325 A1
- WO 2004034604 A1
- US 20060097915 A1
- US 20080159198 A

**Littérature non-brevet citée dans la description**

- Signal acquisition and search, and antenna polarization. *InsideGNSS,* Mars 2007, 26-33
- **VINCENT HEIRIES.** Analysis of Non Ambiguous BOC Signal Acquisition Performance. *17th ION GNSS International Technical Meeting of the Satellite Division of the Institute of Navigation,* 21 Septembre 2004